# EUROPEAN PATENT APPLICATION

(11) **EP 4 262 287 A1**
(43) Date of publication of application: **18.10.2023**
(21) Application number: 20966528.0
(22) Date of filing: 24.12.2020
(51) Int. Cl.: H04W 52/02, H04W 72/04

(54) **METHOD FOR RADIO COMMUNICATION, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: XING, Jinqiang, Dongguan, Guangdong 523860 (CN)
(74) Representative: Novagraaf Technologies
(86) International application number: PCT/CN2020/139167
(87) International publication number: WO 2022/133956

(57) **Abstract**

A method for radio communication, a terminal device, and a network device. The method comprises: a terminal device transmits first information to a network device, the first information being used for determining a beamforming capability of the terminal device. Therefore, the terminal device is capable of reporting beamforming capability information to the network device, thus allowing the network device to configure the terminal device on the basis of the beamforming capability information of the terminal device, and favoring ensured normal operation of the terminal device on multiple bands.

## Description

### TECHNICAL FIELD

The embodiments of the present application relate to the field of communications, and in particular, to a wireless communication method, a terminal device, and a network device.

### BACKGROUND

In the New Radio (NR) system, when a terminal device works in multiple frequency bands (such as Band A and Band B) at the same time, the terminal device needs to perform beamforming in the multiple frequency bands at the same time to achieve the communication with the network device.

In practical applications, the terminal device usually has many implementation manners, for example, it has one or more transmitting/receiving antenna units. In this case, how the network device configures the terminal device to support the terminal device working on multiple frequency bands is an urgent problem to be solved.

### SUMMARY

The present application provides a wireless communication method, a terminal device and a network device. The terminal device reports beamforming capability information to the network device, so that the network device can configure the terminal device based on the beamforming capability information of the terminal device, which is beneficial to ensure the normal operation of the terminal device on multiple frequency bands.

In a first aspect, a method of wireless communication is provided, including: sending, by a terminal device, first information to a network device, where the first information is used for determining a beamforming capability of the terminal device.

In a second aspect, a method of wireless communication is provided, including: receiving, by a network device, first information sent by a terminal device, where the first information is used for determining a beamforming capability of the terminal device.

In a third aspect, a terminal device is provided for executing the method in the above-mentioned first aspect or each implementation manner thereof.

Specifically, the terminal device includes a functional module for executing the method in the above-mentioned first aspect or each implementation manner thereof.

In a fourth aspect, a network device is provided for executing the method in the above-mentioned second aspect or each implementation manner thereof.

Specifically, the network device includes a functional module for executing the method in the above-mentioned second aspect or each implementation manner thereof.

In a fifth aspect, a terminal device is provided, including a processor and a memory. The memory is configured to store a computer program, and the processor is configured to call and run the computer program stored in the memory to execute the method in the above-mentioned first aspect or each implementation manner thereof.

In a sixth aspect, a network device is provided, including a processor and a memory. The memory is configured to store a computer program, and the processor is configured to call and run the computer program stored in the memory to execute the method in the above-mentioned second aspect or each implementation manner thereof.

In a seventh aspect, a chip is provided for implementing the method in any one of the above-mentioned first to second aspects or each implementation manner thereof.

Specifically, the chip includes: a processor for invoking and running a computer program from a memory, so that a device in which the device is installed executes any one of the above-mentioned first to second aspects or each implementation manner thereof.

In an eighth aspect, a computer-readable storage medium is provided for storing a computer program, the computer program causing a computer to execute the method in any one of the above-mentioned first to second aspects or each implementations manner thereof.

In a ninth aspect, a computer program product is provided, including computer program instructions, the computer program instructions causing a computer to execute the method in any one of the above-mentioned first to second aspects or each implementation manner thereof.

In a tenth aspect, there is provided a computer program which, when run on a computer, causes the computer to execute the method in any one of the above-mentioned first to second aspects or each implementation manner thereof.

Through the above technical solutions, the terminal device can report the beamforming capability information to the network device, so that the network device can configure the terminal device based on the beamforming capability information of the terminal device, which is beneficial to ensure the normal operation of the terminal device on multiple frequency bands.

### BRIEF DESCRIPTION OF THE DRAWINGS

FIG. 1 is a schematic diagram of a communication system architecture provided by an embodiment of the present application.
FIG. 2 is a schematic diagram of a millimeter wave frequency band.
FIG. 3 is a schematic diagram of a beam-based communication manner of a terminal device in a 5G system.
FIG. 4 is a schematic diagram of an antenna array of a terminal device having a CBM capability.
FIG. 5 is a schematic diagram of an antenna array of a terminal device having an IBM capability.
FIG. 6 is a schematic diagram of a communication manner in which multiple frequency bands share a beam.
FIG. 7 is a schematic diagram of a communication manner in which multiple frequency bands correspond to independent beams.
FIG. 8 is a schematic interaction diagram of a method of wireless communication according to an embodiment of the present application.
FIG. 9 is a schematic diagram of a working frequency range of the antenna array.
FIG. 10 is a schematic diagram of a relationship between the working frequency range of the antenna array and a first frequency interval.
FIGs. 11 to 13 are schematic diagrams illustrating a relationship between a frequency interval between frequency bands and the first frequency interval.
FIG. 14 is a schematic diagram of a frequency band group according to an embodiment of the present application.
FIG. 15 is a schematic block diagram of a terminal device provided according to an embodiment of the present application.
FIG. 16 is a schematic block diagram of a network device provided according to an embodiment of the present application.
FIG. 17 is a schematic block diagram of a communication device provided according to an embodiment of the present application.
FIG. 18 is a schematic block diagram of a chip provided according to an embodiment of the present application.
FIG. 19 is a schematic block diagram of a communication system provided according to an embodiment of the present application.

### DETAILED DESCRIPTION

The technical solutions in the embodiments of the present application will be described below with reference to the accompanying drawings in the embodiments of the present application. Obviously, the described embodiments are part of the embodiments of the present application, not all of the embodiments. With regard to the embodiments in the present application, all other embodiments obtained by persons of ordinary skill in the art without creative efforts shall fall within the protection scope of the present application.

The technical solutions of the embodiments of the present application can be applied to various communication systems, for example: a Global System of Mobile communication (GSM) system, a Code Division Multiple Access (CDMA) system, a Wideband Code Division Multiple Access (WCDMA) system, General Packet Radio Service (GPRS), a Long Term Evolution (LTE) system, an Advanced Long Term Evolution (LTE-A) system, a New Radio (NR) system, an evolution system of NR system, an LTE-based access to unlicensed spectrum (LTE-U) system, an NR-based access to unlicensed spectrum (NR-U) system, a Non-Terrestrial Networks (NTN) system, a Universal Mobile Telecommunication System (UMTS), Wireless Local Area Networks (WLAN), Wireless Fidelity (WiFi), a fifth-generation communication (5th-Generation, 5G) system or other communication systems, etc.

Generally speaking, traditional communication systems support a limited number of connections, which are easy to be implemented. However, with the development of communication technology, mobile communication systems will not only support traditional communication, but also support, for example, Device to Device (D2D) communication, Machine to Machine (M2M) communication, Machine Type Communication (MTC), Vehicle to Vehicle (V2V) communication, or Vehicle to everything (V2X) communication, etc. The embodiments of the present application can also be applied to these communication systems.

Optionally, the communication system in the embodiments of the present application may be applied to a Carrier Aggregation (CA) scenario, a Dual Connectivity (DC) scenario, or a Standalone (SA) network distribution scenario.

Optionally, the communication system in the embodiments of the present application may be applied to an unlicensed spectrum, where the unlicensed spectrum may also be considered as a shared spectrum; or, the communication system in the embodiments of the present application may also be applied to a licensed spectrum, where the licensed spectrum may also be considered as an unshared spectrum.

The embodiments of the present application describe various embodiments in conjunction with network device and terminal device, where the terminal device may also be referred to as User Equipment (UE), an access terminal, a subscriber unit, a subscriber station, a mobile station, a mobile, a remote station, a remote terminal, a mobile device, a user terminal, a terminal, a wireless communication device, a user agent or a user apparatus, etc.

The terminal device may be a station (STATION, ST) in the WLAN, may be a cellular phone, a cordless phone, a Session Initiation Protocol (SIP) phone, a Wireless Local Loop (WLL) station, a Personal Digital Assistant (PDA) device, a handheld device, a computing device with wireless communication capabilities or other processing devices, in-vehicle devices, wearable devices connected to wireless modems, a terminal device in the next-generation communication systems such as NR networks, or a terminal device in future evolved Public Land Mobile Network (PLMN) network, etc.

In the embodiments of the present application, the terminal device may be deployed on land, including indoor or outdoor, handheld, wearable, or vehicle-mounted; it may also be deployed on water (such as ships, etc.); it may also be deployed in the air (such as airplanes, balloons, and satellites).

In the embodiments of the present application, the terminal device may be a mobile phone, a tablet computer (Pad), a computer with a wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city or a wireless terminal device in smart home, etc.

As an example and not a limitation, in the embodiments of the present application, the terminal device may also be a wearable device. The wearable device may also be called a wearable smart device, which is a general term for wearable devices which are developed by intelligently designing daily wear by applying wearable technology, such as glasses, gloves, watches, clothing and shoes. The wearable device is a portable device that is worn directly on the body, or integrated into the user's clothing or accessories. The wearable device is not only a hardware device, but also achieves powerful functions through software support, data interaction, and cloud interaction. Generalized wearable smart devices include full-featured and large-sized devices that can achieve complete or partial functions without relying on smartphones, such as smart watches or smart glasses, and devices that focus only on a certain type of application function and need to be used in conjunction with other devices (e.g., smartphones), such as various types of smart bracelets and smart jewelry for physical sign monitoring.

In the embodiments of the present application, the network device may be a device for communicating with a mobile device, and the network device may be an Access Point (AP) in WLAN, or a base station (Base Transceiver Station, BTS) in GSM or CDMA, it may also be a base station (NodeB, NB) in WCDMA, it may also be an evolutional base station (Evolutional Node B, eNB or eNodeB) in LTE, or a relay station or access point, or in-vehicle device, a wearable device and a network device (gNB) in the NR network or a network device in a future evolutional PLMN network or a network device in the NTN network, etc.

As an example and not a limitation, in the embodiments of the present application, the network device may have a mobile characteristic, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a High Elliptical Orbit (HEO) satellite, etc. Optionally, the network device may also be a base station set in a location such as land or water.

In the embodiments of the present application, the network device may provide services for a cell, and the terminal device communicates with the network device through transmission resources (for example, frequency domain resources, or spectrum resources) used by the cell, and the cell may be a cell corresponding to the network device (for example, the base station), the cell may belong to the macro base station, or it may belong to the base station corresponding to the small cell. The small cell here may include a Metro cell, a Micro cell, a Pico cell, a Femto cell, etc. These small cells have the characteristics of small coverage and low transmission power, and are suitable for providing high-speed data transmission services.

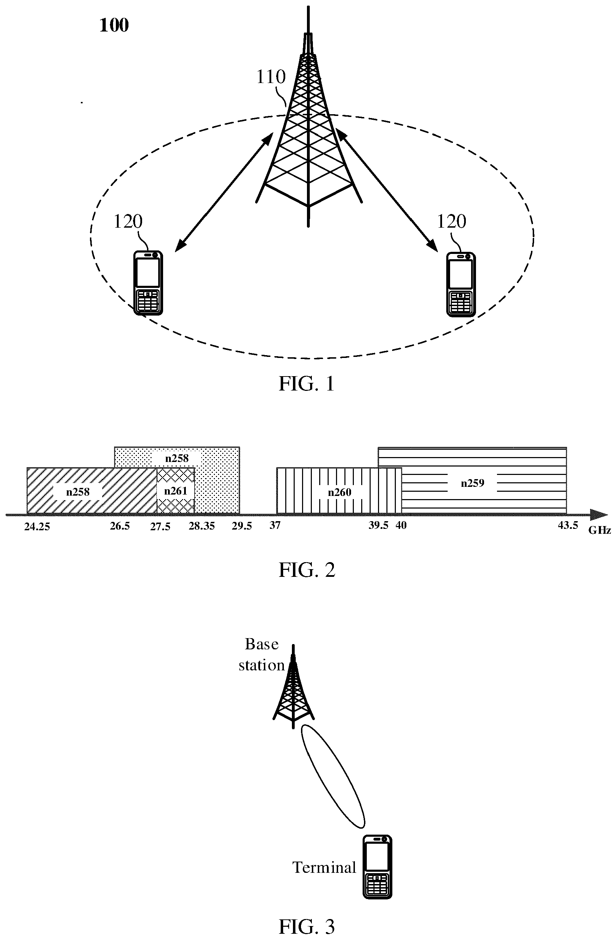

Exemplarily, a communication system 100 to which the embodiments of the present application are applied is shown in FIG. 1. The communication system 100 may include a network device 110, and the network device 110 may be a device that communicates with a terminal device 120 (or referred to as a communication terminal, a terminal). The network device 110 may provide communication coverage for a particular geographic area, and may communicate with the terminal device(s) located within the coverage area.

FIG. 1 exemplarily shows one network device and two terminal devices. Optionally, the communication system 100 may include a plurlaity of network devices and the coverage of each network device may include other numbers of terminal devices, which is not limited by the embodiments of the present application.

Optionally, the communication system 100 may further include other network entities such as a network controller and a mobility management entity, which are not limited in the embodiments of the present application.

It should be understood that, in the embodiments of the present application, a device having a communication function in the network/system may be referred to as a communication device. Taking the communication system 100 shown in FIG. 1 as an example, the communication device may include a network device 110 and terminal devices 120 with a communication function, and the network device 110 and the terminal devices 120 may be the specific devices described above, which will not be repeated here. The communication device may also include other devices in the communication system 100, such as other network entities such as a network controller, a mobility management entity, etc., which are not limited in the embodiments of the present application.

It should be understood that the terms "system" and "network" are often used interchangeably herein. The term "and/or" in the present disclosure is only an association relationship for describing the associated objects, indicating that there may be three kinds of relationships, for example, A and/or B may mean the following three cases: A exists alone, A and B exist at the same time, and B exists alone. In addition, the character "/" in the present disclosure generally indicates that the related objects have an "or" relationship.

It should be understood that the "indication" mentioned in the embodiments of the present application may be a direct indication, an indirect indication, or may represent an associated relationship. For example, if A indicates B, it may represent that A directly indicates B, for example, B can be obtained through A; or it may represent that A indicates B indirectly, for example, A indicates C, and B can be obtained through C; or it may represent that there is an associated relationship between A and B.

In the description of the embodiments of the present application, the term "corresponding" may represent that there is a direct or indirect corresponding relationship between two things, or may represent that there is an associated relationship between the two things, or may represent relationships of indicating and being indicated, configuring and being configured, etc.

In the embodiments of the present application, "predefining" may be implemented by pre-saving corresponding codes, forms, or other means that can be used for indicating relevant information in devices (for example, including terminal devices and network devices). The implementation manner is not limited in the present application. For example, predefining may refer to the definition in the protocol.

In the embodiments of the present application, the "protocol" may refer to a standard protocol in the communication field, for example, may include the LTE protocol, the NR protocol, and related protocols applied in future communication systems, which are not limited in the present application.

In the NR system, the millimeter wave working frequency band is introduced. Usually, the millimeter wave working frequency is above 10 GHz. FIG. 2 is an example of a spectrum range of the millimeter wave band, where n257/n258/n259/n260/n261 etc. are the millimeter wave band numbers.

The spatial propagation loss of electromagnetic waves in the millimeter wave frequency band is very large, resulting in limited coverage of electromagnetic wave signals. In order to overcome the large space loss, the terminal device generally uses an antenna array composed of multiple antenna elements to form narrow beams to transmit and receive signals in the millimeter wave frequency band. These narrow beams have relatively strong directivity, as shown in FIG. 3.

When the terminal device works in multiple frequency bands (such as Band A and Band B) at the same time, the terminal device needs to perform beamforming on multiple frequency bands at the same time to communicate with the base station. From the realization of the terminal device, there are two situations.

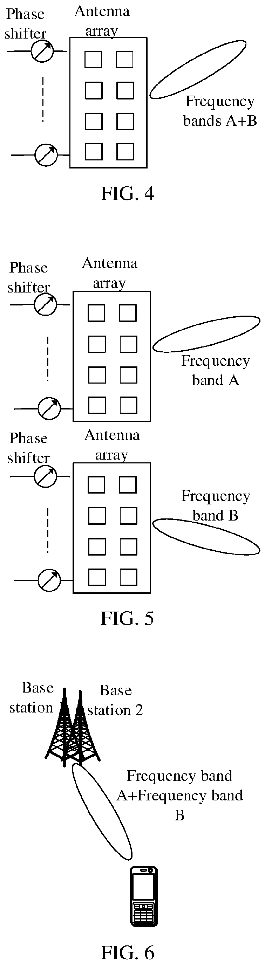

First situation: as shown in FIG. 4, the terminal device has only one group of transmitting/receiving antenna units, and only one beam can be generated at the same moment. This situation is usually called that the terminal device has a Common Beam Management (CBM) capability.

Second situation: as shown in FIG. 5, the terminal device has two (or more) groups of transmitting/receiving antenna units, and can generate two (or more) independent beams at the same moment. This situation is usually called that the terminal device has an Independent Beam Management (IBM) capability.

In the network, for the terminal device with CBM capability, only one beam can be generated at the same moment due to the sharing of the same group of transmitting/receiving antenna units in different frequency bands, which means that the beam can only be directed to one position at the same moment, so it can only work in a cell scenario where Band A and Band B are in co-site, as shown in FIG. 6.

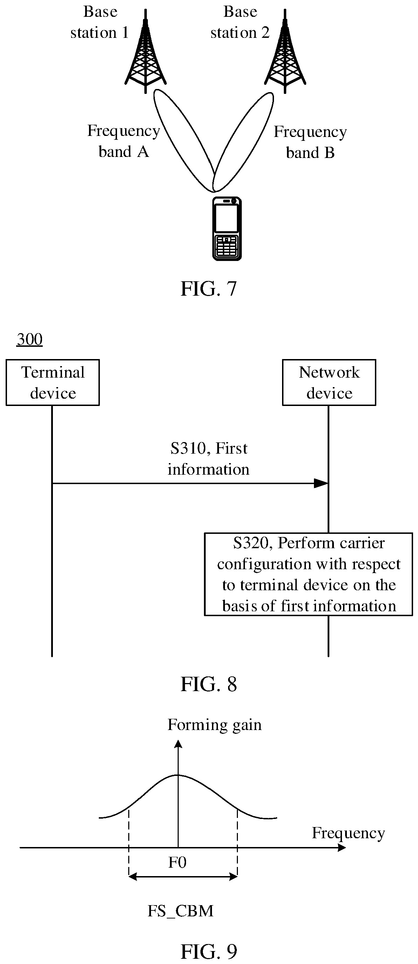

For the terminal device with IBM capability, two or more independent beams can be generated at the same moment, which means that the terminal device can point the beams in different directions at the same moment, so it can work in a cell scenario where Band A and Band B are in non-co-site, as shown in FIG. 7.

Therefore, for the network device, how to configure and/or schedule the terminal device to support the terminal device to work on multiple frequency bands is an ongoing problem.

In order to facilitate the understanding of the technical solutions of the embodiments of the present application, the technical solutions of the present application are described in detail below through specific embodiments. The above related technologies can be arbitrarily combined with the technical solutions of the embodiments of the present application as optional solutions, which all belong to the protection scope of the embodiments of the present application. The embodiments of the present application include at least part of the following contents.

FIG. 8 is a schematic interaction diagram of a method 300 of wireless communication according to an embodiment of the present application. As shown in FIG. 8, the method 300 includes the following contents.

In S310: the terminal device sends first information to a network device, where the first information is used for determining a beamforming capability of the terminal device.

Optionally, the beamforming capability of the terminal device may include whether the terminal device has IBM capability, or, whether the terminal device has CBM capability or IBM capability, or, the number of transmitting antenna units or receiving antenna units that the terminal device has, such as having one group of transmitting antenna units or receiving antenna units, or having multiple groups of transmitting antenna units or receiving antenna units, etc.

Optionally, in some embodiments of the present application, the terminal device may work on multiple frequency bands simultaneously.

Further, the first information is used for determining beamforming capability information of the terminal device on multiple frequency bands.

As an example, the beamforming capability of the terminal device on multiple frequency bands may include that the terminal device has CMB capability on the multiple frequency bands, or the terminal device has IBM capability on the multiple frequency bands.

As another example, the beamforming capability of the terminal device on multiple frequency bands may include that the terminal device adopts independent transmitting antenna units or receiving antenna units to support simultaneous operation on the multiple frequency bands, or, the terminal device adopts the same group of transmitting antenna units or receiving antenna units to support simultaneous operation on the multiple frequency bands.

It should be understood that, in the embodiments of the present application, the above beamforming capability information is only an example, and in other embodiments, the beamforming capability information may further include other related information or parameters, for example, a first frequency interval. The first frequency interval may refer to a frequency interval between the lowest frequency point and the highest frequency point in the plurality of frequency bands, and the present application is not limited thereto.

When the millimeter wave antenna is beam-forming, the optimal forming gain can usually be achieved at the resonance center frequency point F0, and its forming gain gradually decreases when it deviates from this resonance center frequency point. Therefore, under normal circumstances, the millimeter wave antenna array can work within a certain spectrum width. FIG. 9 is a schematic diagram of the working frequency range of the antenna array of the terminal device.

In the embodiments of the present application, a frequency interval with relatively good forming gain is recorded as the first frequency interval, which is referred to as FS-CBM for short. The first frequency interval may also be understood as a frequency interval supported by the common beam management (CBM) capability of the terminal device, that is, the maximum frequency range that can be covered by transmitting one beam by the terminal device, or, in other words, the maximum frequency interval that can be covered by transmitting one beam by the terminal device.

In some embodiments, the beamforming capability of the terminal device is related to the working frequency range of the antenna array of the terminal device, the frequency band ranges of multiple frequency bands configured by the network device, and the first frequency interval.

More specifically, the beamforming capability of the terminal device is related to the maximum frequency interval (denoted as FS2) of the plurality of frequency bands, the minimum frequency interval of the plurality of frequency bands (denoted as FS1) and the first frequency interval.

The maximum frequency interval FS2 may represent a frequency interval between the lowest frequency point and the highest frequency point in the plurality of frequency bands, and the minimum frequency interval FS1 may represent the minimum value among the frequency intervals between adjacent frequency bands in the plurality of frequency bands.

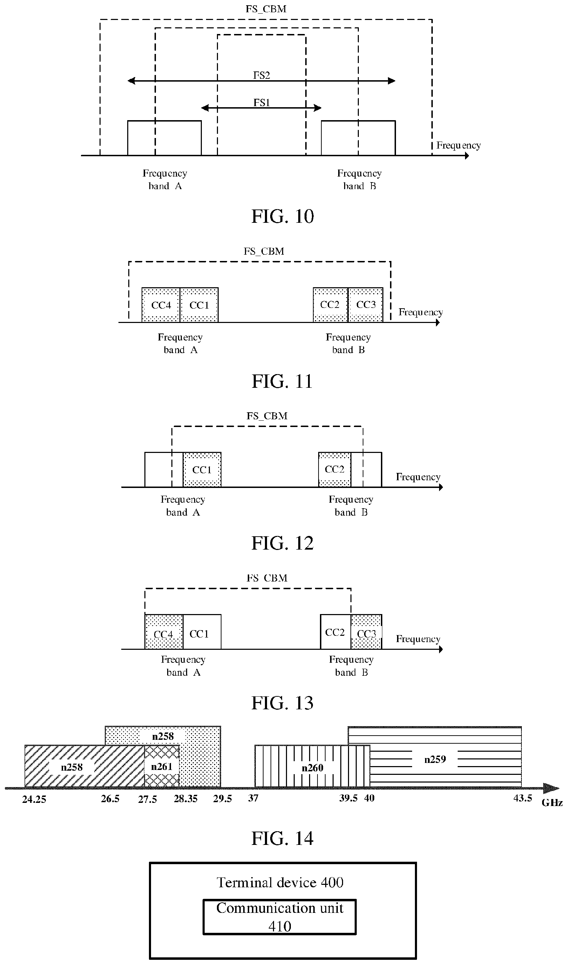

With reference to FIG. 10, the relationship between the frequency band range and the first frequency interval is described by taking the terminal device working on the frequency band A and the frequency band B as an example. In this example, FS 1 represents a frequency interval between the highest frequency point of Band A and the lowest frequency point of Band B, and FS2 represents a frequency interval between the lowest frequency point of Band A and the highest frequency point of Band B.

Case 1: The maximum frequency interval FS2 corresponding to the frequency band A and the frequency band B ≤ FS_CBM, in this case, one beam formed by the terminal device through the CBM can cover the two frequency bands.

Case 2: The minimum frequency interval FS1 corresponding to the frequency band A and the frequency band B ≤ FS_CBM ≤ the maximum frequency interval FS2 corresponding to the frequency band A and the frequency band B, in this case, one beam formed by the terminal device through CBM cannot completely cover these two frequency bands.

Case 3: The minimum frequency interval FS1 corresponding to the frequency band A and the frequency band B ≥ FS_CBM, in this case, one beam formed by the terminal device through CBM can only cover one frequency band.

Therefore, the working frequency range (more specifically, the first frequency interval FS_CBM) of the antenna array of the terminal device affects the configuration of the terminal device by the network device. Therefore, in some cases, the terminal device may also report the first frequency interval to the network device, for assisting the network device to properly configure the terminal device.

Optionally, in some embodiments, the first information includes a first frequency interval and/or first indication information, where the first indication information is used for indicating that the terminal device has the CBM capability on the multiple frequency bands.

After receiving the first information, the network device may determine, according to the first frequency interval and/or the first indication information in the first information, that the terminal device can only work in the co-sited cell scenario on the multiple frequency bands, and may further perform appropriate carrier configuration on the terminal device.

As an example, if the maximum frequency interval FS2 corresponding to the multiple frequency bands is less than or equal to the first frequency interval, the network device may determine that the multiple frequency bands can be covered by transmitting one beam by the terminal device. In this case, as an example, the network device selects any carrier on the multiple frequency bands as the target carrier configured for the terminal device, which can ensure the normal operation of the terminal device on the multiple frequency bands.

For example, as shown in FIG. 11, multiple frequency bands include frequency band A and frequency band B, and FS_CBM is greater than the maximum frequency interval FS2 corresponding to frequency band A and frequency band B. In this case, the network device can configure any carrier in frequency band A and frequency band B for the terminal device, for example, CC1 on the frequency band A and CC2 on the frequency band B, etc., which can ensure the normal operation of the terminal device on the frequency band A and the frequency band B.

As another example, if the maximum frequency interval FS2 corresponding to the multiple frequency bands is greater than or equal to the first frequency interval, the network device may determine that the multiple frequency bands cannot be completely covered by transmitting one beam by the terminal device. In this case, when configuring the carrier, the network device needs to consider that the maximum frequency interval FS2 corresponding to the configured carrier is less than or equal to the first frequency interval, so as to ensure the normal operation of the terminal device on the configured carrier.

For example, as shown in FIG. 12, multiple frequency bands include frequency band A and frequency band B, FS_CBM is smaller than the maximum frequency interval FS2 corresponding to frequency band A and frequency band A, but the maximum frequency interval FS2 corresponding to the carrier CC1 on frequency band A and carrier CC2 on frequency band B is smaller than the first frequency interval. In this case, the network device can configure CC1 in the frequency band A and CC2 in the frequency band B for the terminal device, so as to ensure the normal operation of the terminal device on the frequency band A and the frequency band B.

Optionally, in some embodiments, when the maximum frequency interval FS2 corresponding to the multiple frequency bands is less than or equal to the first frequency interval, the first information includes the first frequency interval and/or first indication information.

Optionally, in some embodiments, when the maximum frequency interval FS2 corresponding to the multiple frequency bands is greater than or equal to the first frequency interval, the first information includes at least the first frequency interval, so that the network device appropriately configures the carriers on the multiple frequency bands according to the first frequency interval, so as to ensure the normal operation of the terminal device on the multiple frequency bands.

Optionally, in some embodiments, the method 300 further includes:
if the frequency interval between the lowest frequency point and the highest frequency point in the plurality of carriers configured by the network device is greater than the first frequency interval, the terminal device turning off some of the plurality of carriers, or, the terminal device alternately using some of the plurality of carriers for signal transmission.

In some embodiments, the network device performs appropriate carrier configuration for the terminal device according to the first information, so that the maximum frequency interval corresponding to the configured carrier is less than or equal to the first frequency interval. In this case, the terminal device only needs to transmit signals based on the carrier configuration.

In other embodiments, the maximum frequency interval corresponding to the carrier configured by the network device may be greater than the first frequency interval. In this case, the terminal device needs to adjust the signal transmission mode by itself so that the maximum frequency interval corresponding to the carrier used for transmitting the signal is less than or equal to the first frequency interval. For example, some of the carriers are turned off, or a way of transmitting in turn is adopted, that is, only a part of the carriers is used for signal transmission each time.

For example, as shown in FIG. 13, the network device configures the terminal device with carriers CC1 and CC4 on frequency band A, and carriers CC2 and CC3 on frequency band B, and the maximum frequency interval FS2 corresponding to frequency band A and frequency band B is greater than FS_CBM. In this case, the terminal device may turn off the carrier CC3 or the carrier CC4, or adopt the way of transmitting in turn, for example, adopt the way in which CC1+CC2+CC4 and CC1+CC2+CC3 work in turn, to ensure the maximum frequency interval of the working carrier of the terminal device to be less than the first frequency interval.

Optionally, in some embodiments, the first information includes second indication information, and the second indication information is used for indicating that the terminal device has independent beam management (IBM) capability on the multiple frequency bands.

For example, if the terminal device is a terminal having the IBM capablility, the terminal device may report the second indication information to the network device.

After the network device receives the first information, it may determine, according to the second indication information in the first information, that the terminal device can operate in a co-site cell and a non-co-site cell on the multiple frequency bands, thus, the terminal device can be flexibly configured and scheduled.

To sum up, the terminal device can report the beamforming capability based on the frequency band combination, and the number of the frequency band combination is not limited, for example, the multiple frequency bands may include two frequency bands, or may also include more frequency bands.

Optionally, in some embodiments, if the first information does not include beamforming capability information corresponding to a certain frequency band combination, it means that the terminal device has the IBM capability on the frequency band combination, or, if the first information does not include beamforming capability information corresponding to a certain frequency band combination, it means that the terminal device has the CBM capability on this frequency band combination.

That is to say, the embodiment of the present application may also implicitly indicate the beamforming capability of the terminal device on the frequency band combination by whether to report the beamforming capability of a certain frequency band combination.

In some embodiments, the terminal device may report the first information in the random access procedure, for example, the first information may be carried in any uplink information in the random access procedure, such as MSGA, or MSG3, etc.

In some embodiments, for a certain frequency band combination in the random access procedure, the terminal device does not report the beamforming capability corresponding to the frequency band combination (that is, the uplink information in the random access procedure does not include the beamforming capability corresponding to the frequency band combination), it indicates that the terminal device has the default beamforming capability on this frequency band combination, such as CBM capability or IBM capability.

Optionally, in some embodiments, the first information includes third indication information, and the third indication information is used for indicating beamforming capability information of the terminal device on a frequency band combination in a first frequency band group, where the first frequency band group includes at least two frequency bands.

Optionally, in some embodiments, the third indication information is used for indicating first beamforming capability information, where the first beamforming capability information corresponds to all frequency band combinations in the first frequency band group.

Optionally, in the case that the terminal device has the same beamforming capability on the frequency band combinations in the first frequency band group, the first information includes the first beamforming capability information.

That is, when the terminal device has the same beamforming capability on the frequency band combinations in one frequency band group, the terminal device can report the beamforming capability in the unit of the frequency band group, thereby reducing signaling overhead. When the beamforming capability is reported in the unit of the frequency band group, the specific implementation manners of the beamforming capability information refers to the relevant descriptions in the foregoing embodiments, which are not repeated here for brevity.

For example, as shown in FIG. 14, there are two frequency band groups on the terminal device, where the frequency band group 1 includes n257, n258, and n261, and the frequency band group 2 includes n259 and n260.

In some embodiments, the first information may include the beamforming capability of the terminal device on the frequency band combinations in the frequency band group 1, for example, the beamforming capability of the terminal device on the frequency band combinations of n257+n258, n257+n261, and n258+n261. Similarly, the first information may further include the beamforming capability of the terminal device on the frequency band combination in the frequency band group 2, for example, the beamforming capability of the terminal device on the frequency band combination of n259+n260.

In some embodiments, if the terminal device has the same beamforming capability on the frequency band combinations in the frequency band group 1, in this case, the terminal device can report the beamforming capability in the unit of the frequency band group, that is, only report one beamforming capability information, which is applicable to all frequency band combinations in the frequency band group.

For example, if the FS2 corresponding to the frequency band combinations in the frequency band group 1 are all less than or equal to the first frequency interval, the terminal device may report the first frequency interval and/or the first indication information.

For another example, if the terminal device has the IBM capability on the frequency band combinations in the frequency band group 1, it may report the second indication information.

Optionally, in some embodiments, the multiple frequency bands include multiple uplink frequency bands and/or multiple downlink frequency bands.

That is, the terminal device may report to the network device the beamforming capability of the terminal device on multiple uplink frequency bands, and/or the beamforming capability of the terminal device on multiple downlink frequency bands.

That is to say, the terminal device may separately report the uplink beamforming capability and the downlink beamforming capability. Alternatively, the terminal device may uniformly report the uplink beamforming capability and the downlink beamforming capability.

It should be understood that, for the indication manner of the beamforming capability of the terminal device on multiple uplink frequency bands, and the indication manner of the beamforming capability of the terminal device on multiple downlink frequency bands, reference may be made to the above-mentioned related implementation of the beamforming capability of the terminal device on multiple frequency bands, which is not repeated here for the sake of simplicity.

Optionally, in the case that the beamforming capability of the terminal device on the multiple uplink frequency bands and the beamforming capability of the terminal device on the multiple downlink frequency bands are different, the first information includes beamforming capability information of the terminal device on the multiple uplink frequency bands and/or beamforming capability information of the terminal device on the multiple downlink frequency bands.

That is, when the uplink beamforming capability and the downlink beamforming capability of the terminal device are different, the terminal device can separately report the uplink beamforming capability and the downlink beamforming capability.

Optionally, in the case that the beamforming capability of the terminal device on the multiple uplink frequency bands is the same as the beamforming capability of the terminal device on the multiple downlink frequency bands, the first information includes beamforming capability information of the terminal device on the multiple frequency bands, and the beamforming capability information may be applicable to the uplink frequency band and the downlink frequency band.

That is, in the case where the uplink beamforming capability and the downlink beamforming capability of the terminal device are the same, the terminal device can perform unified reporting of the uplink beamforming capability and the downlink beamforming capability.

In summary, the terminal device can report beamforming capability information to the network device, such as reporting the beamforming capability in the unit of a frequency band combination, or reporting the beamforming capability in the unit of a frequency band group, or separately reporting uplink beamforming capability and downlink beamforming capability, or uniformly reporting the uplink beamforming capability and downlink beamforming capability of the terminal device, etc., so that the network device can configure the terminal device based on the beamforming capability information of the terminal device, which is beneficial to ensure the normal operation of the terminal device on multiple frequency bands.

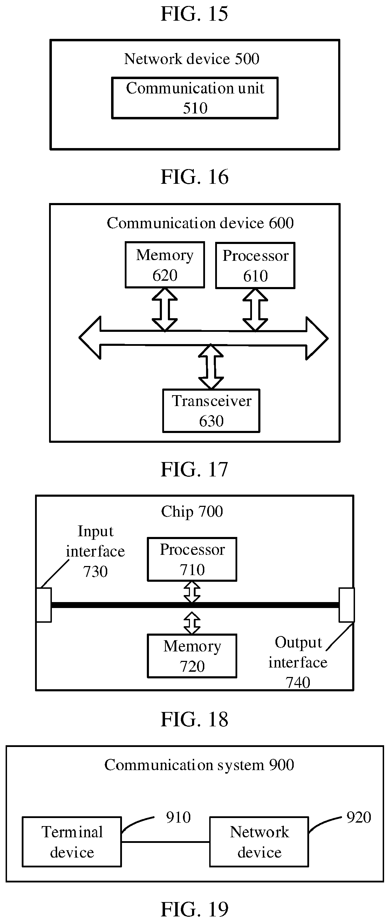

The method embodiments of the present application are described in detail above with reference to FIGs. 8 to 14, and the apparatus embodiments of the present application are described in detail below with reference to FIGs. 15 to 19. It should be understood that the apparatus embodiments and the method embodiments correspond to each other, and similar description may refer to the method embodiments.

FIG. 15 shows a schematic block diagram of a terminal device 400 according to an embodiment of the present application. As shown in FIG. 15, the terminal device 400 includes:
a communication unit 410, configured to send first information to the network device, where the first information is used for determining a beamforming capability of the terminal device.

Optionally, in some embodiments, the first information is used for determining beamforming capability information of the terminal device on a plurality of frequency bands.

Optionally, in some embodiments, the first information includes a first frequency interval and/or first indication information, where the first frequency interval is a frequency interval supported by a common beam management (CBM) capability of the terminal device, and the first indication information is used for indicating that the terminal device has the CBM capability on the plurality of frequency bands.

Optionally, in some embodiments, in the case that a frequency interval between a lowest frequency point and a highest frequency point in the plurality of frequency bands is less than or equal to a first frequency interval, the first information includes the first frequency interval and/or the first indication information; or

in the case that the frequency interval between the lowest frequency point and the highest frequency point in the plurality of frequency bands is greater than or equal to the first frequency interval, the first information includes the first frequency interval.

Optionally, in some embodiments, the terminal device 400 further includes:
a processing unit, configured to, if a frequency interval between the lowest frequency point and the highest frequency point in a plurality of carriers configured by the network device is greater than the first frequency interval, turn off some of the plurality of carriers, or, use, by the terminal device, part of the plurality of carriers in turn for signal transmission.

Optionally, in some embodiments, the first information includes second indication information, and the second indication information is used for indicating that the terminal device has an independent beam management (IBM) capability on the plurality of frequency bands.

Optionally, in some embodiments, the first information includes third indication information, where the third indication information is used for indicating beamforming capability information of the terminal device on a frequency band combination in a first frequency band group, where the first frequency band group includes at least two frequency bands.

Optionally, in some embodiments, the third indication information is used for indicating first beamforming capability information, where the first beamforming capability information corresponds to all frequency band combinations in the first frequency band group.

Optionally, in some embodiments, in the case that the terminal device has the same beamforming capability on the frequency band combinations in the first frequency band group, the first information includes the first beamforming capability information.

Optionally, in some embodiments, the first information does not include beamforming capability information corresponding to the plurality of frequency bands, indicating that the terminal device has the CBM capability on the plurality of frequency bands; or
the first information does not include beamforming capability information corresponding to the plurality of frequency bands, indicating that the terminal device has the IBM capability on the plurality of frequency bands.

Optionally, in some embodiments, the plurality of frequency bands include a plurality of uplink frequency bands and/or a plurality of downlink frequency bands.

Optionally, in some embodiments, in the case that the beamforming capability of the terminal device on the plurality of uplink frequency bands and the beamforming capability of the terminal device on the plurality of downlink frequency bands are different, the first information includes beamforming capability information of the terminal device on the plurality of uplink frequency bands and/or beamforming capability information of the terminal device on the plurality of downlink frequency bands.

Optionally, in some embodiments, the above-mentioned communication unit may be a communication interface or a transceiver, or an input/output interface of a communication chip or a system-on-chip. The aforementioned processing unit may be one or more processors.
It should be understood that the terminal device 400 according to the embodiments of the present application may correspond to the terminal device in the method embodiments of the present application, and the above-mentioned and other operations and/or functions of various units in the terminal device 400 are for the purpose of realizing the corresponding processes of the terminal device in the method 300 shown in FIGs. 8 to 14 respectively, which is not repeated here for brevity.

FIG. 16 is a schematic block diagram of a network device according to an embodiment of the present application. The network device 500 of FIG. 16 includes:
a communication unit 510, configured to receive first information sent by a terminal device, where the first information is used for determining a beamforming capability of the terminal device.

Optionally, in some embodiments, the first information is used for determining beamforming capability information of the terminal device on the plurality of frequency bands.

Optionally, in some embodiments, the first information includes a first frequency interval and/or first indication information, where the first frequency interval is a frequency range supported by the common beam management (CBM) capability of the terminal device, and the first indication information is used for indicating that the terminal device has the CBM capability on the multiple frequency bands.

Optionally, in some embodiments, the network device 500 further includes:
a processing unit, configured to perform carrier configuration on the terminal device according to the first frequency interval.

Optionally, in some embodiments, the first information includes second indication information, and the second indication information is used for indicating that the terminal device has an independent beam management (IBM) capability on the plurality of frequency bands.

Optionally, in some embodiments, the first information includes third indication information, where the third indication information is used for indicating beamforming capability information of the terminal device on frequency band combinations in a plurality of frequency band groups, where each frequency band group includes at least two frequency bands.

Optionally, in some embodiments, the third indication information is used for indicating first beamforming capability information, where the first beamforming capability information corresponds to each frequency band combination in the plurality of frequency band groups.

Optionally, in some embodiments, the network device 500 further includes:
a processing unit, configured to determine that the terminal device has the CBM capability on the plurality of frequency bands if the first information does not include beamforming capability information corresponding to the plurality of frequency bands; or
determine that the terminal device has the IBM capability on the plurality of frequency bands, if the first information does not include beamforming capability information corresponding to the plurality of frequency bands.

Optionally, in some embodiments, the plurality of frequency bands include a plurality of uplink frequency bands and/or a plurality of downlink frequency bands.

Optionally, in some embodiments, the above-mentioned communication unit may be a communication interface or a transceiver, or an input/output interface of a communication chip or a system-on-chip. The aforementioned processing unit may be one or more processors.

It should be understood that the network device 500 according to the embodiments of the present application may correspond to the network device in the method embodiments of the present application, and the above-mentioned and other operations and/or functions of each unit in the network device 500 are for the purpose of realizing the corresponding processes of the network device in the method 300 shown in FIG. 8 to FIG. 14, respectively, which is not repeated here for brevity.

FIG. 17 is a schematic structural diagram of a communication device 600 provided by an embodiment of the present application. The communication device 600 shown in FIG. 17 includes a processor 610, and the processor 610 can call and run a computer program from a memory, so as to implement the methods in the embodiments of the present application.

Optionally, as shown in FIG. 17, the communication device 600 may further include a memory 620. The processor 610 may call and run a computer program from the memory 620 to implement the methods in the embodiments of the present application.

The memory 620 may be a separate device independent of the processor 610, or may be integrated in the processor 610.

Optionally, as shown in FIG. 17, the communication device 600 may further include a transceiver 630, and the processor 610 may control the transceiver 630 to communicate with other devices, specifically, may send information or data to other devices, or receive information or data sent by other devices.

Among them, the transceiver 630 may include a transmitter and a receiver. The transceiver 630 may further include antennas, and the number of the antennas may be one or more.

Optionally, the communication device 600 may specifically be the network device in the embodiments of the present application, and the communication device 600 may implement the corresponding processes implemented by the network device in each method in the embodiments of the present application, which is not repeated here for brevity.

Optionally, the communication device 600 may specifically be the mobile terminal/terminal device of the embodiments of the present application, and the communication device 600 may implement the corresponding processes implemented by the mobile terminal/terminal device in each method of the embodiments of the present application, which is not repeated here for brevity.

FIG. 18 is a schematic structural diagram of a chip according to an embodiment of the present application. The chip 700 shown in FIG. 18 includes a processor 710, and the processor 710 can call and run a computer program from a memory, so as to implement the methods in the embodiments of the present application.

Optionally, as shown in FIG. 18, the chip 700 may further include a memory 720. The processor 710 may call and run a computer program from the memory 720 to implement the methods in the embodiments of the present application.

The memory 720 may be a separate device independent of the processor 710, or may be integrated in the processor 710.

Optionally, the chip 700 may further include an input interface 730. The processor 710 may control the input interface 730 to communicate with other devices or chips, and specifically, may acquire information or data sent by other devices or chips.

Optionally, the chip 700 may further include an output interface 740. The processor 710 may control the output interface 740 to communicate with other devices or chips, and specifically, may output information or data to other devices or chips.

Optionally, the chip may be applied to the network device in the embodiments of the present application, and the chip may implement the corresponding processes implemented by the network device in each method of the embodiments of the present application, which is not repeated here for brevity.

Optionally, the chip may be applied to the mobile terminal/terminal device in the embodiments of the present application, and the chip may implement the corresponding processes implemented by the mobile terminal/terminal device in each method of the embodiments of the present application, which is not repeated here for brevity.

It should be understood that the chip mentioned in the embodiments of the present application may also be referred to as a system level chip, a system chip, a chip system, or a system-on-chip, or the like.

FIG. 19 is a schematic block diagram of a communication system 900 provided by an embodiment of the present application. As shown in FIG. 19, the communication system 900 includes a terminal device 910 and a network device 920.

The terminal device 910 may be used to implement the corresponding functions implemented by the terminal device in the above methods, and the network device 920 may be used to implement the corresponding functions implemented by the network device in the above methods, which is not repeated here for brevity.

It should be understood that the processor in the embodiments of the present application may be an integrated circuit chip, which has a signal processing capability. In the implementation process, each step of the above method embodiments may be completed by a hardware integrated logic circuit or an instruction in the form of software in a processor. The above-mentioned processor may be a general-purpose processor, a Digital Signal Processor (DSP), an Application Specific Integrated Circuit (ASIC), a Field Programmable Gate Array (FPGA) or other programmable logic devices, discrete gates or transistor logic devices, discrete hardware components. The methods, steps, and logic block diagrams disclosed in the embodiments of the present application can be implemented or executed. The general-purpose processor may be a microprocessor or the processor may be any conventional processor or the like. The steps of the methods disclosed in conjunction with the embodiments of the present application may be directly embodied as executed by a hardware decoding processor, or executed by a combination of hardware and software modules in the decoding processor. The software module may be located in a random access memory, a flash memory, a read-only memory, a programmable read-only memory or an electrically erasable programmable memory, a register and other storage media mature in the art. The storage medium is located in the memory, and the processor reads the information in the memory, and completes the steps of the above methods in combination with its hardware.

It can be understood that the memory in the embodiments of the present application may be a volatile memory or a non-volatile memory, or may include both volatile and non-volatile memories. The non-volatile memory may be a Read-Only Memory (ROM), a Programmable ROM (PROM), an Erasable PROM (EPROM), an Electrically EPROM (EPROM) or a flash memory. The volatile memory may be a Random Access Memory (RAM), which acts as an external cache. By way of illustration and not limitation, many forms of RAM are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It should be noted that the memory of the systems and methods described herein is intended to include, but not be limited to, these and any other suitable types of memory.

It should be understood that the above memories are examples but not a limitative description. For example, the memory in the embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) and a Direct Rambus RAM (DR RAM) and so on. That is, the memory in the embodiments of the present application is intended to include but not limited to these and any other suitable types of memory.

Embodiments of the present application further provide a computer-readable storage medium for storing a computer program.

Optionally, the computer-readable storage medium may be applied to the network device in the embodiments of the present application, and the computer program enables the computer to execute the corresponding processes implemented by the network device in the various methods of the embodiments of the present application, which is not repeated here for brevity.

Optionally, the computer-readable storage medium may be applied to the mobile terminal/terminal device in the embodiments of the present application, and the computer program enables the computer to execute the corresponding processes implemented by the mobile terminal/terminal device in the various methods of the embodiments of the present application, which is not repeated here for brevity.

Embodiments of the present application also provide a computer program product, including computer program instructions.

Optionally, the computer program product may be applied to the network device in the embodiments of the present application, and the computer program instructions cause the computer to execute the corresponding processes implemented by the network device in the various methods of the embodiments of the present application, which is not repeated here for brevity.

Optionally, the computer program product may be applied to the mobile terminal/terminal device in the embodiments of the present application, and the computer program instructions cause the computer to execute the corresponding processes implemented by the mobile terminal/terminal device in the various methods of the embodiments of the present application, which is not repeated here for brevity.

Embodiments of the present application also provide a computer program.

Optionally, the computer program may be applied to the network device in the embodiments of the present application, and when the computer program is run on the computer, the computer is caused to execute the corresponding processes implemented by the network device in the various methods of the embodiments of the present application, which is not repeated here for brevity.

Optionally, the computer program may be applied to the mobile terminal/terminal device in the embodiments of the present application, and when the computer program is run on the computer, the computer is caused to execute the corresponding processes implemented by the mobile terminal/terminal device in the various methods of the embodiments of the present application, which is not repeated here for brevity.

Those of ordinary skill in the art can realize that the units and algorithm steps of each example described in conjunction with the embodiments disclosed herein can be implemented in electronic hardware, or a combination of computer software and electronic hardware. Whether these functions are performed in hardware or software depends on the specific application and design constraints of the technical solution. Skilled artisans may implement the described functionality using different methods for each particular application, but such implementations should not be considered beyond the scope of the present application.

Those skilled in the art can clearly understand that, for the convenience and brevity of description, the specific working process of the above-described systems, apparatuses and units may refer to the corresponding processes in the foregoing method embodiments, which will not be repeated here.

In the several embodiments provided in the present application, it should be understood that the disclosed system, apparatus and method may be implemented in other manners. For example, the apparatus embodiments described above are only illustrative. For example, the division of the units is only a logical function division. In actual implementation, there may be other division methods. For example, multiple units or components may be combined or may be integrated into another system, or some features can be ignored, or not implemented. On the other hand, the shown or discussed mutual coupling or direct coupling or communication connection may be indirect coupling or communication connection through some interfaces, apparatuses or units, and may be in electrical, mechanical or other forms.

The units described as separate components may or may not be physically separated, and components displayed as units may or may not be physical units, that is, they may be located in one place, or may be distributed to multiple network units. Some or all of the units may be selected according to actual needs to achieve the purpose of the solution in the present embodiment.

In addition, each functional unit in each embodiment of the present application may be integrated into one processing unit, or each unit may exist physically alone, or two or more units may be integrated into one unit.

The functions, if implemented in the form of software functional units and sold or used as independent products, may be stored in a computer-readable storage medium. Based on this understanding, the essence or the part that contributes to the related art of the technical solution of the present application or the part of the technical solution can be embodied in the form of a software product. The computer software product is stored in a storage medium, including several instructions, which are used to cause a computer device (which may be a personal computer, a server, or a network device, etc.) to execute all or part of the steps of the methods described in the various embodiments of the present application. The aforementioned storage medium includes: a U disk, a mobile hard disk, a Read-Only Memory (ROM), a Random Access Memory (RAM), a magnetic disk or an optical disk, or other media that can store program codes.

The above mentioned are only specific implementations of the present application, but the scope of protection of the present application is not limited thereto. Any person skilled in the art can easily think of variations or substitutions within the technical scope disclosed in the present application, which should be covered by the scope of protection of the present application. Therefore, the scope of protection of the present application shall be stated to be subject to the scope of protection of the claims.

## Claims

1. A method of wireless communication, comprising:
sending, by a terminal device, first information to a network device, wherein the first information is used for determining a beamforming capability of the terminal device.

2. The method according to claim 1, wherein the first information is used for determining beamforming capability information of the terminal device on a plurality of frequency bands.

3. The method according to claim 2, wherein the first information comprises a first frequency interval and/or first indication information, wherein the first frequency interval is a frequency interval supported by a common beam management (CBM) capability of the terminal device, and the first indication information is used for indicating that the terminal device has the CBM capability on the plurality of frequency bands.

4. The method according to claim 3, wherein in a case that a frequency interval between a lowest frequency point and a highest frequency point in the plurality of frequency bands is less than or equal to the first frequency interval, the first information comprises the first frequency interval and/or the first indication information; or
in a case that the frequency interval between the lowest frequency point and the highest frequency point in the plurality of frequency bands is greater than or equal to the first frequency interval, the first information comprises the first frequency interval.

5. The method according to claim 3 or 4, further comprising:
in response to that a frequency interval between a lowest frequency point and a highest frequency point in a plurality of carriers configured by the network device is greater than the first frequency interval, turning off, by the terminal device, some of the plurality of carriers, or, alternately using, by the terminal device, some of the plurality of carriers for signal transmission.

6. The method according to claim 2, wherein the first information comprises second indication information, and the second indication information is used for indicating that the terminal device has an independent beam management (IBM) capability on the plurality of frequency bands.

7. The method according to any one of claims 1 to 6, wherein the first information comprises third indication information, and the third indication information is used for indicating beamforming capability information of the terminal device on a frequency band combination in a first frequency band group, wherein the first frequency band group comprises at least two frequency bands.

8. The method according to claim 7, wherein the third indication information is used for indicating first beamforming capability information, and the first beamforming capability information corresponds to all frequency band combinations in the first frequency band group.

9. The method according to claim 8, wherein in a case that the terminal device has a same beamforming capability on the frequency band combinations in the first frequency band group, the first information comprises the first beamforming capability information.

10. The method according to claim 1, wherein the first information not comprising beamforming capability information corresponding to a plurality of frequency bands indicates that the terminal device has a CBM capability on the plurality of frequency bands; or
the first information not comprising the beamforming capability information corresponding to the plurality of frequency bands indicates that the terminal device has an IBM capability on the plurality of frequency bands.

11. The method according to any one of claims 2-10, wherein the plurality of frequency bands comprises a plurality of uplink frequency bands and/or a plurality of downlink frequency bands.

12. The method according to claim 11, wherein in a case that a beamforming capability of the terminal device on the plurality of uplink frequency bands and a beamforming capability of the terminal device on the plurality of downlink frequency bands are different, the first information comprises beamforming capability information of the terminal device on the plurality of uplink frequency bands and/or beamforming capability information of the terminal device on the plurality of downlink frequency bands.

13. A method of wireless communication, comprising:
receiving, by a network device, first information sent by a terminal device, wherein the first information is used for determining a beamforming capability of the terminal device.

14. The method according to claim 1, wherein the first information is used for determining beamforming capability information of the terminal device on a plurality of frequency bands.

15. The method according to claim 14, wherein the first information comprises a first frequency interval and/or first indication information, wherein the first frequency interval is a frequency range supported by a common beam management (CBM) capability of the terminal device, and the first indication information is used for indicating that the terminal device has the CBM capability on the plurality of frequency bands.

16. The method according to claim 15, further comprising:
performing, by the network device, carrier configuration on the terminal device according to the first frequency interval.

17. The method according to claim 14, wherein the first information comprises second indication information, and the second indication information is used for indicating that the terminal device has an independent beam management (IBM) capability on the plurality of frequency bands.

18. The method according to any one of claims 13 to 17, wherein the first information comprises third indication information, and the third indication information is used for indicating beamforming capability information of the terminal device on a frequency band combination in a first frequency band group, wherein the first frequency band group comprises at least two frequency bands.

19. The method according to claim 18, wherein the third indication information is used for indicating first beamforming capability information, and the first beamforming capability information corresponds to all frequency band combinations in the first frequency band group.

20. The method according to claim 13, further comprising:
in response to that the first information does not comprise beamforming capability information corresponding to a plurality of frequency bands, determining that the terminal device has a CBM capability on the plurality of frequency bands; or
in response to that the first information does not comprise the beamforming capability information corresponding to the plurality of frequency bands, determining that the terminal device has an IBM capability on the plurality of frequency bands.

21. The method according to any one of claims 14-20, wherein the plurality of frequency bands comprises a plurality of uplink frequency bands and/or a plurality of downlink frequency bands.

22. A terminal device, comprising:
a communication unit, configured to send first information to a network device, wherein the first information is used for determining a beamforming capability of the terminal device.

23. The terminal device according to claim 22, wherein the first information is used for determining beamforming capability information of the terminal device on a plurality of frequency bands.

24. The terminal device according to claim 23, wherein the first information comprises a first frequency interval and/or first indication information, wherein the first frequency interval is a frequency interval supported by a common beam management (CBM) capability of the terminal device, and the first indication information is used for indicating that the terminal device has the CBM capability on the plurality of frequency bands.

25. The terminal device according to claim 24, wherein in a case that a frequency interval between a lowest frequency point and a highest frequency point in the plurality of frequency bands is less than or equal to the first frequency interval, the first information comprises the first frequency interval and/or the first indication information; or
in a case that the frequency interval between the lowest frequency point and the highest frequency point in the plurality of frequency bands is greater than or equal to the first frequency interval, the first information comprises the first frequency interval.

26. The terminal device according to claim 24 or 25, further comprising:
a processing unit, configured to, in response to that a frequency interval between a lowest frequency point and a highest frequency point in a plurality of carriers configured by the network device is greater than the first frequency interval, turn off some of the plurality of carriers, or, alternately use, by the terminal device, some of the plurality of carriers for signal transmission.

27. The terminal device according to claim 23, wherein the first information comprises second indication information, and the second indication information is used for indicating that the terminal device has an independent beam management (IBM) capability on the plurality of frequency bands.

28. The terminal device according to any one of claims 22 to 27, wherein the first information comprises third indication information, and the third indication information is used for indicating beamforming capability information of the terminal device on a frequency band combination in a first frequency band group, wherein the first frequency band group comprises at least two frequency bands.

29. The terminal device according to claim 28, wherein the third indication information is used for indicating first beamforming capability information, and the first beamforming capability information corresponds to all frequency band combinations in the first frequency band group.

30. The terminal device according to claim 29, wherein in a case that the terminal device has a same beamforming capability on the frequency band combinations in the first frequency band group, the first information comprises the first beamforming capability information.

31. The terminal device according to claim 22, wherein the first information not comprising beamforming capability information corresponding to a plurality of frequency bands indicates that the terminal device has a CBM capability on the plurality of frequency bands; or
the first information not comprising the beamforming capability information corresponding to the plurality of frequency bands indicates that the terminal device has an IBM capability on the plurality of frequency bands.

32. The terminal device according to any one of claims 23-31, wherein the plurality of frequency bands comprises a plurality of uplink frequency bands and/or a plurality of downlink frequency bands.

33. The terminal device according to claim 32, wherein in a case that a beamforming capability of the terminal device on the plurality of uplink frequency bands and a beamforming capability of the terminal device on the plurality of downlink frequency bands are different, the first information comprises beamforming capability information of the terminal device on the plurality of uplink frequency bands and/or beamforming capability information of the terminal device on the plurality of downlink frequency bands.

34. A network device, comprising:
a communication unit, configured to receive first information sent by a terminal device, wherein the first information is used for determining a beamforming capability of the terminal device.

35. The network device according to claim 34, wherein the first information is used for determining beamforming capability information of the terminal device on a plurality of frequency bands.

36. The network device according to claim 35, wherein the first information comprises a first frequency interval and/or first indication information, wherein the first frequency interval is a frequency range supported by a common beam management (CBM) capability of the terminal device, and the first indication information is used for indicating that the terminal device has the CBM capability on the plurality of frequency bands.

37. The network device according to claim 36, further comprising:
a processing unit, configured to perform carrier configuration on the terminal device according to the first frequency interval.

38. The network device according to claim 35, wherein the first information comprises second indication information, and the second indication information is used for indicating that the terminal device has an independent beam management (IBM) capability on the plurality of frequency bands.

39. The network device according to any one of claims 34 to 38, wherein the first information comprises third indication information, and the third indication information is used for indicating beamforming capability information of the terminal device on frequency band combinations in a plurality of frequency band groups, wherein each of the frequency band groups comprises at least two frequency bands.

40. The network device according to claim 39, wherein the third indication information is used for indicating first beamforming capability information, and the first beamforming capability information corresponds to each frequency band combination in the plurality of frequency band groups.

41. The network device according to claim 34, further comprising:
a processing unit, configured to, in response to that the first information does not comprise beamforming capability information corresponding to a plurality of frequency bands, determine that the terminal device has a CBM capability on the plurality of frequency bands; or
in response to that the first information does not comprise beamforming capability information corresponding to the plurality of frequency bands, determine that the terminal device has an IBM capability on the plurality of frequency bands.

42. The network device according to any one of claims 35-41, wherein the plurality of frequency bands comprises a plurality of uplink frequency bands and/or a plurality of downlink frequency bands.

43. A terminal device, comprising: a processor and a memory, wherein the memory is configured to store a computer program, the processor is configured to call and run the computer program stored in the memory, and execute the method according to any one of claims 1 to 12.

44. A chip, comprising: a processor for calling and running a computer program from a memory, so that a device installed with the chip executes the method according to any one of claims 1 to 12.

45. A computer-readable storage medium, used for storing a computer program, wherein the computer program causes a computer to execute the method according to any one of claims 1 to 12.

46. A computer program product, comprising computer program instructions, wherein the computer program instructions cause a computer to execute the method according to any one of claims 1 to 12.

47. A computer program, wherein the computer program causes a computer to execute the method according to any one of claims 1 to 12.

48. A network device, comprising: a processor and a memory, wherein the memory is configured to store a computer program, the processor is configured to call and run the computer program stored in the memory, and execute the method according to any one of claims 13 to 21.

49. A chip, comprising: a processor for calling and running a computer program from a memory, so that a device installed with the chip executes the method according to any one of claims 13 to 21.

50. A computer-readable storage medium, used for storing a computer program, wherein the computer program causes a computer to execute the method according to any one of claims 13 to 21.

51. A computer program product, comprising computer program instructions, wherein the computer program instructions cause a computer to execute the method according to any one of claims 13 to 21.

52. A computer program, wherein the computer program causes a computer to execute the method according to any one of claims 13 to 21.
